# EUROPÄISCHE PATENTSCHRIFT

(11) **EP 2 956 315 B1**
(45) Veröffentlichungstag und Bekanntmachung des Hinweises auf die Patenterteilung: **28.12.2016**
(21) Anmeldenummer: 14701469.0
(22) Anmeldetag: 16.01.2014
(51) Int. Cl.: B60G 11/18, B60G 7/02, B60G 3/20, B60G 21/055

(54) **RADAUFHÄNGUNG FÜR EIN KRAFTFAHRZEUG**
WHEEL SUSPENSION FOR A MOTOR VEHICLE
SUSPENSION DE ROUE CONÇUE POUR UN VÉHICULE AUTOMOBILE

(30) Priorität: 16.02.2013 DE 102013002710
(43) Veröffentlichungstag der Anmeldung: 23.12.2015
(73) Patentinhaber: Audi AG, 85045 Ingolstadt (DE)
(72) Erfinder: MOHRLOCK, Dominik, 85114 Buxheim (DE); GOLDBERG, Ruben, 85049 Ingolstadt (DE); SCHINDLER, Andreas, 85055 Ingolstadt (DE)
(74) Vertreter: Reichert, Thomas Klaus
(86) Internationale Anmeldenummer: PCT/EP2014/000102
(87) Internationale Veröffentlichungsnummer: WO 2014/124721

(56) Entgegenhaltungen:
- EP-A2- 1 184 215
- WO-A1-03/008212
- WO-A1-2009/069793
- DE-A1- 4 015 777
- DE-A1-102009 052 877
- JP-A- 2008 168 891
- JP-A- 2009 029 257
- US-A1- 2002 116 104

## Beschreibung

Die Erfindung betrifft eine Radaufhängung für ein Kraftfahrzeug, insbesondere für eine Fahrzeughinterachse mit nicht gelenkten Fahrzeugrädern, nach dem Oberbegriff des Patentanspruches 1.

Bei einer aktiven Fahrwerksregelung kann jede Radaufhängung einer Fahrzeugachse, insbesondere einer Hinterachse, jeweils einen Drehaktuator aufweisen. Mit den beiden Drehaktuatoren der Fahrzeugachse können je nach Ansteuerung das Fahrzeugniveau und/oder Nick- und Wankbewegungen des Kraftfahrzeuges des Fahrzeuges ausgeglichen werden.

Aus der DE 10 2009 052 877 A1 ist eine gattungsgemäße Radaufhängung für ein Kraftfahrzeug bekannt, bei der der Fahrzeugaufbau, insbesondere ein fahrzeugaufbauseitiger Hilfsrahmen, über Lenker drehgelenkig mit einem Radträger verbunden ist. Zudem ist ein Drehaktuator für eine aktive Fahrwerksregelung vorgesehen, der eine Motor-Getriebe-Einheit aufweist, mit der Drehmomente über zumindest einem Drehstab als Stellkräfte auf den Mehrlenkerverband übertragen werden können.

Der Drehaktuator ist mit seinem Drehstab in der Fahrzeugquerrichtung angeordnet. Bei einer Quer-Anordnung des Drehstabs vor der Hinterachse muss aus Bauraumgründen das Tankvolumen des Kraftfahrzeuges verringert werden. Bei einer Quer-Anordnung hinter der Hinterachse ergibt sich dagegen ein Bauraumkonflikt mit der Reserveradmulde. Zudem ist eine Quer-Anordnung oberhalb der Hinterachse denkbar, bei der jedoch eine Höhenmaßkette im Fahrzeugrohbau deutlich größer wird, wodurch der Ladeboden beziehungsweise der Innenraum entsprechend eingeschränkt wird. Unterhalb der Hinterachse verläuft dagegen die Abgasanlage und/oder Kardanwellen inklusive Getriebe, die einer Queranordnung der Drehaktuatoren entgegenstehen. Generell führt die bauraumintensive Motor-Getriebe-Einheit des Drehaktuators zu Packageproblemen bei der Radaufhängung.

Die JP 2008 168 891 A1 offenbart eine relevante aktive Radaufhängung mit einem Mehrlenkerverband aus Lenkern und einer Motor-Getriebe-Einheit.

Aus der EP 1 184 214 A2 ist eine weitere Radaufhängung bekannt, bei der die Motor-Getriebe-Einheit des Drehaktuators koaxial zum Drehstab angeordnet ist, der sich in der Fahrzeuglängsrichtung erstreckt.

Die Aufgabe der Erfindung besteht darin, eine Radaufhängung für ein Kraftfahrzeug bereitzustellen, bei der trotz Einsatz einer aktiven Fahrwerksregelung Packageprobleme in der Fahrzeugachse reduziert sind.

Die Aufgabe ist durch die Merkmale des Patentanspruches 1 gelöst. Vorteilhafte Weiterbildungen der Erfindung sind in den Unteransprüchen offenbart.

Die Erfindung beruht auf dem Sachverhalt, dass eine unmittelbare Anordnung des Drehaktuators am Hilfsrahmen des Fahrzeuges oftmals zu Packageproblemen führt. Vor diesem Hintergrund ist , erfindungsgemäß unmittelbar im Lenkerverband zwischen dem Hilfsrahmen und dem Radträger ein Freiraum bereitgestellt, in dem zumindest teilweise die bauraumintensive Motor-Getriebe-Einheit des Drehaktuators angeordnet ist. Der Freiraum für die Motor-Getriebe-Einheit ist durch zumindest einen der Lenker des Mehrlenkerverbandes in der Fahrzeuglängsrichtung nach vorne oder nach hinten begrenzt.

Der Freiraum für die Motor-Getriebe-Einheit des Drehaktuators ist in der Fahrzeuglängsrichtung zwischen einem ersten Lenker und einem zweiten Lenker nach vorne und nach hinten begrenzt. Die ersten und zweiten Lenker können jeweils untere Lenker eines Fünflenkerverbandes sein. In einem solchen Mehrlenkerverband können die Lenker jeweils in einer oberen Lenkerebene in einer unteren Lenkerebene angeordnet sein. Entsprechend kann der Freiraum für die Motor-Getriebe-Einheit besonders bevorzugt zwischen zwei Lenker in der unteren Lenkerebene angeordnet sein.

Der mittels der Motor-Getriebe-Einheit betätigbare Drehstab kann einen Abtriebshebel tragen, der über eine Koppelstange an einem der Lenker gelenkig angebunden ist. Auf diese Weise können die in der Motor-Getriebe-Einheit erzeugten Drehmomente über den Lastpfad Motor/Getriebe/Drehstab/Antriebshebel/Koppelstange/Lenker/Fahrzeugrad letztlich als lineare Stellkräfte auf das Fahrzeugrad übertragen werden. Im Falle des oben erwähnten Fünflenkerverbandes kann der Abtriebshebel und die Koppelstange an einem Lenker der oberen Lenkerebene angreifen und unterhalb dieses oberen Lenkers angeordnet sein.

Der Freiraum für die Motor-Getriebe-Einheit kann nach oben durch zumindest einen oberen Lenker begrenzt sein, der zum Beispiel über den Drehaktuator mit Stellkräften beaufschlagt wird. In der Fahrzeuglängsrichtung betrachtet kann dieser obere Lenker zwischen dem ersten unteren Lenker und dem zweiten unteren Lenker angeordnet sein.

Aus Bauraumgründen ist ein Übersetzungsgetriebe der Motör-Getriebe-Einheit des Drehaktuators koaxial zum Drehstab angeordnet.

Der Drehstab kann zudem zusammen mit der Motor-Getriebe-Einheit in der Fahrzeuglängsrichtung fluchtend ausgerichtet sein. In diesem Fall kann der rechtwinklig vom Drehstab abragende Abtriebshebel in den Freiraum für die Motor-Getriebe-Einheit einragen. Der Drehstab des Drehaktuators ist zusammen mit dem koaxial angeordneten Getriebe unterhalb des Hilfsrahmen-Längsträgers angeordnet und ist fluchtend mit dessen Verlauf ausgerichtet.

In einer weiteren Ausführungsform kann der Motor des Drehaktuators nicht koaxial, sondern vielmehr mit einem radialen Achsabstand zum Drehstab angeordnet sein. Der Motor kann zudem über ein Zwischengetriebe auf das Drehstab koaxiale Übersetzungsgetriebe abtreiben. Auf diese Weise kann der Motor, insbesondere ein Elektromotor, unabhängig vom Übersetzungsgetriebe je nach Bauraumerfordernisse positioniert werden. Speziell ein solcher, vom Übersetzungsgetriebe räumlich getrennter Motor kann bevorzugt in dem oben erwähnten Freiraum des Mehrlenkerverbandes angeordnet sein.

In einer besonders kompakten Ausführung des Mehrlenkerverbandes kann die Koppelstange vertikal nach oben verlaufen und mit einer Gelenkverbindung mit dem oberen Lenker des Mehrlenkerverbandes verbunden sein. Die Gelenkverbindung zwischen der Koppelstange und dem oberen Lenker kann, insbesondere im eingefederten Zustand des Fahrzeugs, in der Fahrzeugquerrichtung um einen Quer-Freigang außerhalb eines Fahrzeug-Längsträgers angeordnet sein. Der obere Lenker kann sich in der Vertikalrichtung unterhalb des Fahrzeug-Längsträgers erstrecken. Zur Bereitstellung eines Vertikal-Freigangs für den Fahrzeug-Längsträger kann der obere Lenker nach unten gekrümmt sein, und zwar mit an einer unteren Scheitelstelle zusammenlaufenden Bogenabschnitten. Die Scheitelstelle kann im eingefederten Zustand des Fahrzeugs um einen Vertikal-Freigang vom Fahrzeug-Längsträger beabstandet sein.

Mit dem Zwischengetriebe kann darüber hinaus ein größeres Gesamtübersetzungsverhältnis zwischen dem Elektromotor und dem Drehstab bewirkt werden. Die Elektromotoren können hier daher kleiner und gewichtsgünstiger ausgelegt werden. Dadurch kann der Elektromotor äußerst kompakt und damit bauraumsparend ausgeführt sein. Bevorzugt kann das zum Drehstab koaxiale Übersetzungsgetriebe und der davon beabstandete Motor der Motor-Getriebei Einheit jeweils in Einzelgehäusen angeordnet sein. Das Zwischengetriebe kann beispielhaft ein Umschlingungstrieb oder ein Stirnradtrieb sein, um den erforderlichen, radialen Versatz zwischen dem Motor und dem Drehstab herzustellen.

Die vorstehend erläuterten und/oder in den Unteransprüchen wiedergegebenen vorteilhaften Aus- und/oder Weitebildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Teilansicht von unten den Mehrlenkerverband der Radaufhängung;
- Fig. 2: in einer Teilansicht von oben den Mehrlenkerverband der Radaufhängung;
- Fig. 3: in einer Teilansicht von vorne den Mehrlenkerverband der Radaufhängung; und
- Fig. 4: in einer Ansicht in der Fahrzeugquerrichtung von außen die Gelenk-Anbindungen der Lenker an einem Hilfsrahmen-Längsträger sowie die Anordnung des Drehaktuators im Mehrlenkerverband.

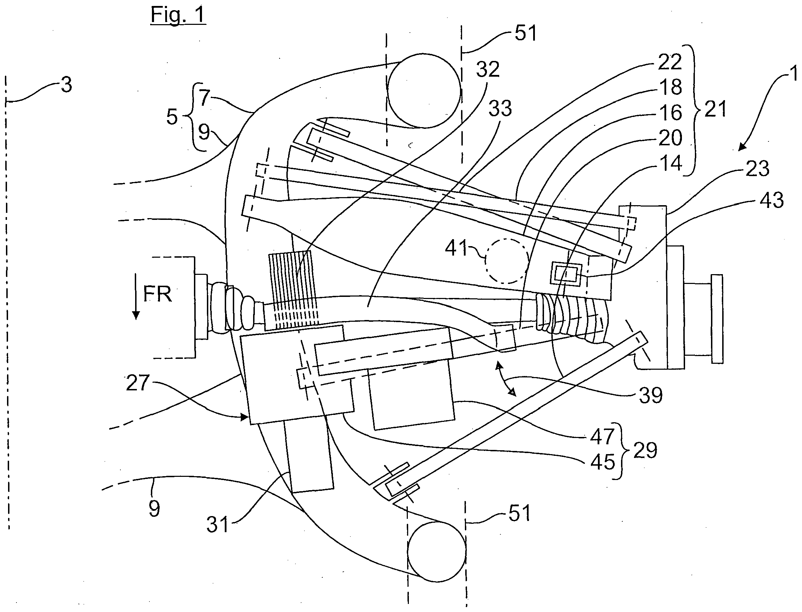

In der Fig. 1 ist in einer Teilansicht von unten eine Hinterachse 1 für ein Kraftfahrzeug dargestellt, die nur insoweit beschrieben ist, als es für das Verständnis der Erfindung erforderlich ist. Die Hinterachse 1 ist mit Bezug auf eine Fahrzeugmittellängsebene 3 spiegelsymmetrisch ausgeführt. Die Hinterachse 1 weist einen Hilfsrahmen 5 auf, der aus Längsträgern 7 sowie aus vorderen und hinteren Querträgern 9 aufgebaut ist. Der Hilfsrahmen 5 ist in an sich bekannter Weise an einem Fahrzeugrohbau angebunden. Am Längsträger 7 des Hilfsrahmens 5 sind für die Radaufhängung untere Lenker 14, 16, 18 sowie obere Lenker 20, 22 in räumlich versetzter Anordnung über nicht näher gezeigte Lenkerlager angelenkt. Die Lenker 14 bis 22 erstrecken sich in der Fahrzeugquerrichtung y nach außen bis zum Radträger 23, der ein nicht dargestelltes Hinterrad des Kraftfahrzeuges trägt. Im vorliegenden Ausführungsbeispiel wird das Hinterrad durch eine Gelenkwelle 25 angetrieben, das in ein nicht dargestelltes, am Hilfsrahmen 5 aufgehängtes Hinterachs-Differenzial geführt ist.

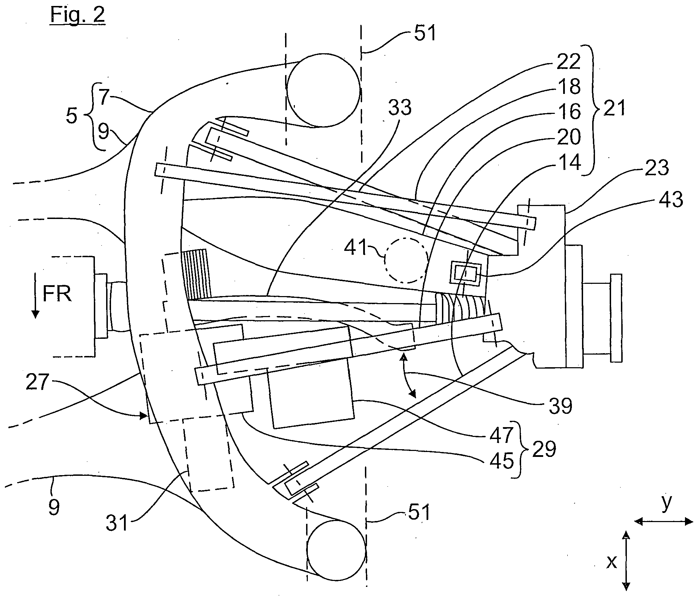

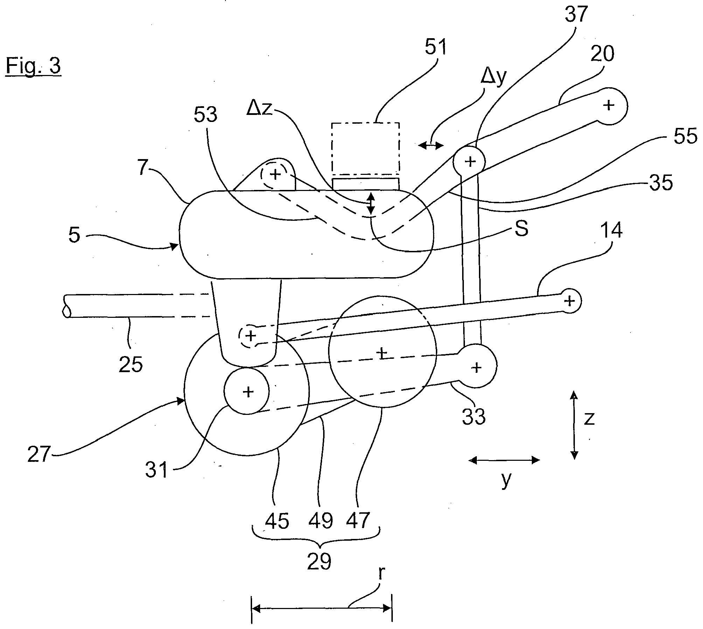

Wie aus den Fig. 1 und 2 weiter hervorgeht, ist am Hilfsrahmen-Längsträger 7 ein Drehaktuator 27 für eine aktive Fahrwerksregelung vorgesehen. Der Drehaktuator 27 weist eine Motor-Getriebe-Einheit 29 auf, mit der ein Drehstab 31 trieblich verbunden ist. Der Drehstab ist über eine angedeutete Steckverzahnung 32 kraftübertragend mit einem Abtriebshebel 33 in Verbindung, der über eine Koppelstange 35 (Fig. 3) in einer Gelenkverbindung 37 mit einem oberen Hebel 20 des Mehrlenkerverbandes 21 ist.

Der in der Fahrtrichtung FR vordere untere erste Lenker 14 und der dahinter angeordnete untere zweite Lenker 16 laufen in der Fahrzeugquerrichtung y nach innen keilförmig auseinander, und zwar unter Bildung eines Freiraums 39, in dem teilweise die Motor-Getriebe-Einheit 29 des Drehaktuators 27 einragt. Am zweiten unteren Lenker 16 sind gemäß den Fig. 1 und 2 jeweils eine angedeutete Tragfeder 41 sowie ein angedeuteter Teleskopstoßdämpfer 43 abgestützt.

Die Motor-Getriebe-Einheit 29 weist gemäß den Figuren ein koaxial zum Drehstab 31 vorgesehenes Übersetzungsgetriebe 45 sowie einen mit einem radialen Achsversatz r (Fig. 3) zum Drehstab 31 beabstandeten Elektromotor 47 auf, der über ein Zwischengetriebe 49 in Antriebsverbindung mit dem Übersetzungsgetriebe 45 ist. Das Gehäuse des Übersetzungsgetriebes 45 des Drehaktuators 27 ist in nicht näher gezeigter Weise bauteilsteif am Hilfsrahmen-Längsträger 7 befestigt, und zwar so, dass der Drehstab 31 des Drehaktuators 27 fluchtend mit dem bogenförmigen Verlauf des Hilfsrahmen-Längsträgers 7 ausgerichtet ist. Der gesamte Drehaktuator 27 ist dabei unterhalb des Hilfsrahmen-Längsträgers 7 sowie unterhalb der Gelenkwelle 25 positioniert. Ausgehend vom Übersetzungsgetriebe 45 ragt dabei das Zwischengetriebe 49 zusammen mit dem Elektromotor 47 vollständig in den Freiraum 39 zwischen den beiden unteren Lenkern 14, 16 hinein.

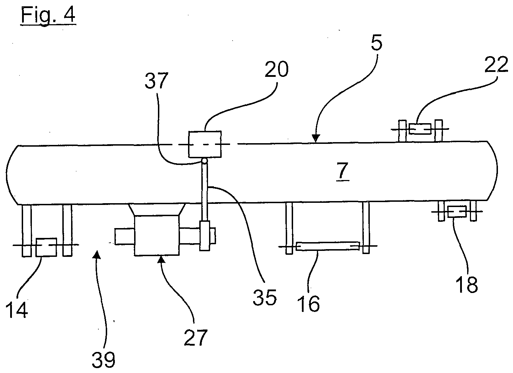

Der Freiraum 39 zwischen den beiden unteren Lenkern 14, 16 ist gemäß der Fig. 4 in der Vertikalrichtung z nach oben durch den oberen Lenker 20 des Mehrlenkerverbandes 21 begrenzt. In der Fig. 4 sind in Perspektivdarstellung die Anbindungspunkte der Lenker am Hilfsrahmen-Längsträger 7 sowie die Positionierung des Drehaktuators 27 im Freiraum 39 gezeigt. Demzufolge sind die beiden oberen Lenker 20, 22 jeweils in einer oberen Lenkerebene angeordnet, während die insgesamt drei unteren Lenker 14, 16, 18 in einer unteren Lenkerebene positioniert sind. Der Abtriebshebel 33 sowie die Koppelstange 35 sind dabei in etwa fluchtend unterhalb des oberen Lenkers 20 angeordnet, wobei die Koppelstange 35 im Wesentlichen vertikal nach oben ausgerichtet ist.

In der Fig. 3 ist die Radaufhängung in einem eingefederten Zustand des Kraftfahrzeuges gezeigt. Demzufolge ist die Gelenkverbindung 37 zwischen der Koppelstange 35 und dem vorderen oberen Lenker 20 in der Fahrzeugquerrichtung y um einen Quer-Freigang Δy außerhalb des Fahrzeug-Längsträgers 51 angeordnet. Der sich unterhalb des Fahrzeug-Längsträgers 51 erstreckende Lenker 20 ist in etwa V-förmig nach unten gekrümmt, um einen ausreichend großen Vertikal-Freigang Δz bereitzustellen. Die V-förmige Krümmung weist gemäß der Fig. 3 zwei an einer unteren Scheitelstelle S zusammenlaufende Bogenabschnitte 53, 55 auf. Die untere Scheitelstelle S des Lenkers 20 ist dabei um den vorerwähnten Vertikal-Freigang Δz von der Unterseite des Fahrzeug-Längsträgers 51 beabstandet.

In der Fig. 2 ist der Drehstab 31 mit seiner Drehachse um einen geringen Winkel von der Fahrzeuglängsrichtung x verschwenkt. Im Gegensatz dazu ist in dem Ausführungsbeispiel der Fig. 3 der Drehstab 31 mit seiner Drehachse fluchtend mit der Fahrzeuglängsrichtung x angeordnet.

## Patentansprüche

1. Radaufhängung für ein Kraftfahrzeug, mit einem Mehrlenkerverband (21) aus Lenkern, die an einem Hilfsrahmen (5) des Fahrzeugaufbaus, der Längsträger (7) und Querträger (9) aufweist, und an einem Radträger (23) angelenkt sind, und mit einem Drehaktuator (27) für eine aktive Fahrwerksregelung, der eine Motor-Getriebe-Einheit (29) aufweist, mit der Drehmomente über einen Drehstab (31) als Stellkräfte auf den Mehrlenkerverband (21) übertragbar sind, **dadurch gekennzeichnet, dass** Lenker (14, 16) des Mehrlenkerverbands (21) in der Fahrzeuglängsrichtung (x) nach vorne und nach hinten einen Freiraum (39) begrenzen, in dem teilweise die Motor-Getriebe-Einheit (29) des Drehaktuators (27) angeordnet ist, dass die Motor-Getriebe-Einheit (29) des Drehaktuators (27) ein zum Drehstab (31) koaxiales Übersetzungsgetriebe (45) und einen Motor (47) aufweist, der mit einem radialen Achs-Abstand (r) zum Drehstab (31) angeordnet ist und mit einem Zwischengetriebe (49) auf das Übersetzungsgetriebe (45) abtreibt, dass das Übersetzungsgetriebe (45) der Motor-Getriebe-Einheit (29) unterhalb eines der Längsträger (7) angeordnet ist, wobei der Drehstab (31) des Drehaktuators (27) fluchtend mit dem Verlauf des Längsträgers (7) ausgerichtet ist, und dass der Motor (47) der Motor-Getriebe-Einheit (29) im Freiraum (39) angeordnet ist.

2. Radaufhängung nach Anspruch 1, **dadurch gekennzeichnet, dass** der Freiraum (39) für die Motor-Getriebe-Einheit (29) des Drehaktuators (27) in der Fahrzeuglängsrichtung (x) zwischen einem ersten Lenker (14) und einem zweiten Lenker (16) bereitgestellt ist, die untere Lenker eines Fünflenkerverbands sind.

3. Radaufhängung nach Anspruch 1 oder 2, **dadurch gekennzeichnet, dass** der Drehstab (31) des Drehaktuators (27) einen Abtriebshebel (33) trägt, der über eine Koppelstange (35) an einem Lenker (20) des Mehrlenkerverbands (21), insbesondere einem oberen Lenker, angebunden ist, und/oder dass der Abtriebshebel (33) und die Koppelstange (35) unterhalb des oberen Lenkers (20) angeordnet sind.

4. Radaufhängung nach Anspruch 3, **dadurch gekennzeichnet, dass** der Freiraum (39) für die Motor-Getriebe-Einheit (29) nach oben durch den oberen Lenker (20) begrenzt ist, und/oder dass der obere Lenker (20) in der Fahrzeuglängsrichtung (x) zwischen dem ersten unteren Lenker (14) und dem zweiten unteren Lenker (16) angeordnet ist.

5. Radaufhängung nach einem der vorhergehenden Ansprüche, **dadurch gekennzeichnet, dass** der Drehstab (31) mit der Motor-Getriebe-Einheit (29) in der Fahrzeuglängsrichtung (x) ausgerichtet ist, und/oder dass der Abtriebshebel (33) rechtwinklig vom Drehstab (31) in den Freiraum (39) für die Motor-Getriebe-Einheit (29) einragt.

6. Radaufhängung nach einem der vorhergehenden Ansprüche, **dadurch gekennzeichnet, dass** der Drehaktuator (27) mit seiner Drehachse unterhalb einer zum Fahrzeugrad geführten Gelenkwelle (25) sowie einer Radmitte angeordnet ist.

## Claims

1. Wheel suspension for a motor vehicle, having a multi-link assembly (21) made from links, which has the side member (7) and cross member (9) on an auxiliary frame (5) of the vehicle body, and are hinged on a wheel carrier (23), and having a rotary actuator (27) for an active chassis control, which has an engine-transmission unit (29) with which the torques are transferable to the multi-link assembly (21) via a torsion bar (31) as positioning forces, **characterised in that** links (14, 16) of the multi-link assembly (21) delimit a clearance (39) to the front and to the rear in the vehicle longitudinal direction (x), in which clearance the engine-transmission unit (29) of the rotary actuator (27) is partially arranged, **in that** the engine-transmission unit (29) of the rotary actuator (27) has a transmission gear unit (45) which is coaxial to the torsion bar (31) and an engine (47) which is arranged with a radial axial spacing (r) relative to the torsion bar (31) and drives the transmission gear unit (45) with an intermediate gear (49), **in that** the transmission gear unit (45) of the engine-transmission unit (29) is arranged beneath one of the side members (7), wherein the torsion rod (31) of the rotary actuator (27) is oriented to align with the course of the side member (7) and **in that** the engine (47) of the engine-transmission unit (29) is arranged in the clearance (39).

2. Wheel suspension according to claim 1, **characterised in that** the clearance (39) for the engine-transmission unit (29) of the rotary actuator (27) is provided between a first link (14) and a second link (16) in the vehicle longitudinal direction (x), said first and second links being lower links of a five-link assembly.

3. Wheel suspension according to claim 1 or 2, **characterised in that** the torsion rod (31) of the rotary actuator (27) bears a drive lever (33) which is connected via a coupling rod (35) to a link (20) of the multi-link assembly (21), in particular an upper link and/or **in that** the drive lever (33) and the coupling rod (35) are arranged beneath the upper link (20).

4. Wheel suspension according to claim 3, **characterised in that** the clearance (39) for the engine-transmission unit (29) is delimited at the top by the upper link (20) and/or **in that** the upper link (20) is arranged in vehicle longitudinal direction (x) between the first lower link (14) and the second lower link (16).

5. Wheel suspension according to any one of the preceding claims, **characterised in that** the torsion rod (31) is oriented with the engine-transmission unit (29) in the vehicle longitudinal direction (x), and/or **in that** the drive lever (33) projects at right angles from the torsion rod (31) into the clearance (39) for the engine-transmission unit (29).

6. Wheel suspension according to any one of the preceding claims, **characterised in that** the rotary actuator (27) is arranged with its rotational axis below a drive shaft (25), which is guided towards the vehicle wheel, as well as a wheel centre.

## Revendications

1. Suspension de roue pour un véhicule automobile, comprenant un ensemble multibras (21) composé de bras, qui sont articulés au niveau d'un faux-châssis (5) de la carrosserie de véhicule, lequel présente des longerons (7) et des traverses (9), et au niveau d'un support de roue (23), et comprenant un actionneur rotatif (27) pour un réglage de châssis actif, lequel présente une unité moteur-transmission (29), avec laquelle des couples de rotation peuvent être transmis en tant que forces de réglage à l'ensemble multibras (21) par l'intermédiaire d'une barre de torsion (31), **caractérisée en ce que** des bras (14, 16) de l'ensemble multibras (21) délimitent, dans la direction longitudinale de véhicule (x), vers l'avant et vers l'arrière, un espace libre (39), dans lequel est disposée en partie l'unité moteur-transmission (29) de l'actionneur rotatif (27), **en ce que** l'unité moteur-transmission (29) de l'actionneur rotatif (27) présente une transmission à démultiplication (45) coaxiale par rapport à la barre de torsion (31) et un moteur (47), qui est disposé avec un entraxe (r) radial par rapport à la barre de torsion (31) et qui entraîne en sortie la transmission à démultiplication (45) avec une transmission intermédiaire (49), **en ce que** la transmission à démultiplication (45) de l'unité moteur-transmission (29) est disposée en dessous de l'un des longerons (7), la barre de torsion (31) de l'actionneur rotatif (27) étant alignée avec l'extension du longeron (7), et **en ce que** le moteur (47) de l'unité moteur-transmission (29) est disposé dans l'espace libre (39).

2. Suspension de roue selon la revendication 1, **caractérisée en ce que** l'espace libre (39) pour l'unité moteur-transmission (29) de l'actionneur rotatif (27) se trouve, dans la direction longitudinale de véhicule (x), entre un premier bras (14) et un deuxième bras (16), qui sont des bras inférieurs d'un ensemble à cinq bras.

3. Suspension de roue selon la revendication 1 ou 2, **caractérisée en ce que** la barre de torsion (31) de l'actionneur rotatif (27) supporte un levier de sortie (33), qui est relié à un bras (20) de l'ensemble multibras (21), en particulier à un bras supérieur, par l'intermédiaire d'une tige de couplage (35), et/ou **en ce que** le levier de sortie (33) et la tige de couplage (35) sont disposés en dessous du bras supérieur (20).

4. Suspension de roue selon la revendication 3, **caractérisée en ce que** l'espace libre (39) pour l'unité moteur-transmission (29) est délimité vers le haut par le bras supérieur (20), et/ou **en ce que** le bras supérieur (20) est disposé, dans la direction longitudinale de véhicule (x), entre le premier bras inférieur (14) et le deuxième bras inférieur (16).

5. Suspension de roue selon l'une quelconque des revendications précédentes, **caractérisée en ce que** la barre de torsion (31) est alignée avec l'unité moteur-transmission (29) dans la direction longitudinale de véhicule (x), et/ou **en ce que** le levier de sortie (33) dépasse, de manière perpendiculaire à la barre de torsion (31), dans l'espace libre (39) pour l'unité moteur-transmission (29).

6. Suspension de roue selon l'une quelconque des revendications précédentes, **caractérisée en ce que** l'actionneur rotatif (27) est disposé par son axe de rotation en dessous d'un arbre articulé (25), guidé vers la roue de véhicule, ainsi que d'un centre de roue.
